# EUROPEAN PATENT APPLICATION

(11) **EP 3 677 642 A1**
(43) Date of publication of application: **08.07.2020**
(21) Application number: 18856637.6
(22) Date of filing: 07.09.2018
(51) Int. Cl.: C08L 27/12, C08K 5/14, C08L 71/00, C08L 83/07, C09K 3/10

(54) **UNCROSSLINKED RUBBER COMPOSITION AND RUBBER PRODUCT MANUFACTURED BY USING SAME AND MANUFACTURING METHOD THEREFOR**

(30) Priority: 14.09.2017 JP 2017176309
(71) Applicant: Mitsubishi Cable Industries, Ltd., Chiyoda-ku Tokyo 100-8303 (JP)
(72) Inventor: YASUDA Hiroaki, Amagasaki-shi Hyogo 660-0856 (JP); HAMAMURA Takehiro, Amagasaki-shi Hyogo 660-0856 (JP); ITO Takao, Amagasaki-shi Hyogo 660-0856 (JP)
(74) Representative: Delorme, Nicolas
(86) International application number: PCT/JP2018/033206
(87) International publication number: WO 2019/054293

(57) **Abstract**

An uncrosslinked rubber composition contains: a hydrogen-containing fluororubber; a thermal crosslinking agent that crosslinks the hydrogen-containing fluororubber when heated to a predetermined temperature; and a hydrogen site protective agent that bonds to carbon radicals resulting from breakage of carbon-hydrogen bonds of the hydrogen-containing fluororubber which occurs under irradiation.

## Description

### TECHNICAL FIELD

The present invention relates to uncrosslinked rubber compositions, rubber products manufactured using the same, and methods for manufacturing a rubber product.

### BACKGROUND ART

Silicone rubber is known as a rubber component having high oxygen plasma resistance but slightly low fluorine plasma resistance. A vinylidene fluoride fluororubber (hereinafter referred to as "FKM") is known as a rubber component having high fluorine plasma resistance but slightly low oxygen plasma resistance. A tetrafluoroethylene-perfluorovinylether fluororubber (hereinafter referred to as "FFKM") is known as a rubber component that has high oxygen plasma resistance and high fluorine plasma resistance but is more expensive as compared to silicone rubber and FKM. It is therefore proposed to use a mixture of these rubber components. For example, Patent Document 1 discloses the use of a mixture of silicone rubber and FFKM and the use of a mixture of FKM and FFKM. Patent Document 2 discloses the use of a mixture of FKM and FFKM. Patent Document 3 discloses the use of a mixture of silicone rubber and FKM.

As a technique that increases plasma resistance, Patent Documents 4 and 5 disclose adding a reactive fluorine compound to FKM Patent Document 6 discloses adding an excess of crosslinking aid to FKM, heating the FKM to crosslink the FKM by the crosslinking aid, and irradiating the FKM to further crosslink the FKM by the excess crosslinking aid, thereby increasing the crosslinking density and thus improving rubber's physical properties.

### CITATION LIST

### PATENT DOCUMENTS

PATENT DOCUMENT 1: Japanese Patent No. 4778782
PATENT DOCUMENT 2: Japanese Patent No. 4628814
PATENT DOCUMENT 3: Japanese Unexamined Patent Publication No. 2001-348462
PATENT DOCUMENT 4: Japanese Patent No. 4675907
PATENT DOCUMENT 5: Japanese Patent No. 5189728
PATENT DOCUMENT 6 : Japanese Patent No. 4381087

### SUMMARY OF THE INVENTION

The present invention is an uncrosslinked rubber composition containing: a hydrogen-containing fluororubber; a thermal crosslinking agent that crosslinks the hydrogen-containing fluororubber when heated to a predetermined temperature; and a hydrogen site protective agent that bonds to carbon radicals resulting from breakage of carbon-hydrogen bonds of the hydrogen-containing fluororubber which occurs under irradiation.

The present invention is a rubber product manufactured using the uncrosslinked rubber composition of the present invention. The rubber product is made of a rubber composition in which the hydrogen-containing fluororubber has been crosslinked by the thermal crosslinking agent and the hydrogen site protective agent has bonded to carbons resulting from breakage of the carbon-hydrogen bonds of the hydrogen-containing fluororubber.

A method for manufacturing a rubber product includes: after heating the uncrosslinked rubber composition of the present invention to the predetermined temperature to crosslink the hydrogen-containing fluororubber by the thermal crosslinking agent, irradiating the resultant rubber composition so that the hydrogen site protective agent bonds to the carbon radicals resulting from breakage of the carbon-hydrogen bonds of the hydrogen-containing fluororubber.

### DESCRIPTION OF EMBODIMENTS

An embodiment will be described in detail below.

An uncrosslinked rubber composition according to an embodiment is suitably used for manufacturing of rubber products, especially highly plasma resistant sealing materials such as an O-ring which are used for, e.g., systems using plasma such as a semiconductor etching system and a semiconductor plasma CVD system. The uncrosslinked rubber composition according to the embodiment contains a hydrogen-containing fluororubber that is a rubber component, a thermal crosslinking agent, and a hydrogen site protective agent.

The "hydrogen-containing fluororubber" herein refers to a fluororubber that contains carbons bonded to hydrogens in its polymer main chain. It is preferable that the hydrogen-containing fluororubber contain, e.g., vinylidene fluoride (VDF), propylene (Pr), ethylene (E), etc. as a monomer.

Examples of the hydrogen-containing fluororubber include polymers (PVDF) of vinylidene fluoride (VDF), copolymers of vinylidene fluoride (VDF) and hexafluoropropylene (HFP), copolymers of vinylidene fluoride (VDF), hexafluoropropylene (HFP), and tetrafluoroethylene (TFE), copolymers (FEP) of tetrafluoroethylene (TFE) and propylene (Pr), copolymers of vinylidene fluoride (VDF), propylene (Pr), and tetrafluoroethylene (TFE), copolymers (ETFE) of ethylene (E) and tetrafluoroethylene (TFE), copolymers of ethylene (E), tetrafluoroethylene (TFE), and perfluoromethylvinylether (PMVE), copolymers of vinylidene fluoride (VDF), tetrafluoroethylene (TFE), and perfluoromethylvinylether (PMVE), and copolymers of vinylidene fluoride (VDF) and perfluoromethylvinylether (PMVE). It is preferable that the hydrogen-containing fluororubber contain one or more of these.

The thermal crosslinking agent is a compound that crosslinks the hydrogen-containing fluororubber when heated to a predetermined temperature. Examples of the thermal crosslinking agent include peroxides, polyols, polyamines, and triazines. In terms of the fact that it is not necessary to use an acid acceptor that causes production of particles in a plasma atmosphere, it is preferable that the thermal crosslinking agent contain a peroxide. Examples of peroxides include 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, t-butylperoxymaleic acid, t-butylperoxy isopropyl carbonate, and t-butylperoxybenzoate. The thermal crosslinking agent preferably contains one or more of these and more preferably contains 2,5-dimethyl-2,5-di(t-butylperoxy)hexane. The content (A) of the thermal crosslinking agent is preferably 0.5 parts by mass or more and 2.5 parts by mass or less, and more preferably 0.5 parts by mass or more and 2.0 parts by mass or less, per 100 parts by mass of the hydrogen-containing fluororubber in order to cause crosslinking to proceed sufficiently and obtain satisfactory physical properties as a sealing material.

The hydrogen site protective agent is a compound that bonds to carbon radicals resulting from breakage of carbon-hydrogen bonds of the hydrogen-containing fluororubber which occurs under irradiation. The "hydrogen site" herein refers to the site of carbon bonded to hydrogen in the polymer main chain of the hydrogen-containing fluororubber. Specifically, the "hydrogen site" refers to, e.g., a C-H bond site in a VDF component. It is preferable that the hydrogen site protective agent contain a compound with a perfluoro skeleton having an alkenyl group that bonds to a carbon radical of the hydrogen-containing fluororubber in its molecule and/or a compound with a siloxane skeleton having an alkenyl group that bonds to a carbon radical of the hydrogen-containing fluororubber in its molecule.

Examples of the alkenyl group include a vinyl group, an allyl group, a butenyl group, a pentenyl group, a hexenyl group, and a heptenyl group. The alkenyl group is preferably a vinyl group.

Examples of the compound with a perfluoro skeleton having an alkenyl group in its molecule include compounds with a perfluoropolyether structure and compounds with a perfluoroalkylene structure.

Examples of the compound with a siloxane skeleton having an alkenyl group in its molecule include polymers of methylvinylsiloxane, polymers of dimethylsiloxane, copolymers of dimethylsiloxane and methylvinylsiloxane, and copolymers of dimethylsiloxane, methylvinylsiloxane, and methylphenylsiloxane. Other example includes organopolysiloxanes having an alkenyl group in its molecule which are addition-polymerized liquid silicone rubber.

It is preferable that the compound with a perfluoro skeleton and the compound with a siloxane skeleton have two or more alkenyl groups in its molecule. The two or more alkenyl groups may be the same or different from each other. The hydrogen site protective agent having two or more alkenyl groups not only protects hydrogen sites but also functions as a crosslinking aid that crosslink molecules of the hydrogen-containing fluororubber.

The hydrogen site protective agent preferably contains one or more of the above examples, more preferably contains a compound with a perfluoropolyether structure having an alkenyl group in its molecule, and even more preferably contains a compound with a perfluoropolyether structure having two or more alkenyl groups in its molecule.

It is preferable that the hydrogen site protective agent be a one-component liquid material. In that case, the viscosity of the hydrogen site protective agent at 23°C is preferably 30 Pa·s or more and 100 Pa·s or less and more preferably 40 Pa·s or more and 70 Pa·s or less in the case of the compound with a perfluoro skeleton, and is preferably 100 Pa·s or more and 150 Pa·s or less and more preferably 120 Pa·s or more and 140 Pa·s or less in the case of the compound with a siloxane skeleton.

The content (B) of the hydrogen site protective agent is preferably 1 part by mass or more and 20 parts by mass or less, and more preferably 5 parts by mass or more and 15 parts by mass or less, per 100 parts by mass of the hydrogen-containing fluororubber in order to increase plasma resistance. The content (B) of the hydrogen site protective agent is preferably higher than the content (A) of the thermal crosslinking agent in order to increase plasma resistance. The ratio (B/A) of the content (B) of the hydrogen site protective agent to the content (A) of the thermal crosslinking agent is preferably 2.5 or more and 30 or less, and more preferably 5.0 or more and 10 or less, in order to increase plasma resistance.

The uncrosslinked rubber composition according to the embodiment may further contain a crosslinking aid. The crosslinking aid is a compound that bonds to the hydrogen-containing fluororubber so as to be located between molecules of the hydrogen-containing fluororubber when the hydrogen-containing fluororubber is crosslinked by the thermal crosslinking agent.

Examples of the crosslinking aid include triallyl cyanurate, trimethallyl isocyanurate, triallyl isocyanurate, triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate(1,3,5-tris(2,3,3-trifluoro-2-propenyl)-1,3,5-triazine-2,4,6-trione), tris(diallylamine)-S-triazine, triallyl phosphite, N,N-diallyl acrylamide, 1,6-divinyldodecafluorohexane, hexaallyl phosphoramide, N,N,N',N'-tetraallylphthalamide, N,N,N',N'-tetraallylmalonamide, trivinyl isocyanurate, 2,4,6-trivinylmethyltrisiloxane, tri(5-norbornene-2-methylene)cyanurate, and triallyl phosphite. The crosslinking aid preferably contains one or more of these and more preferably contains triallyl isocyanurate.

The content (C) of the crosslinking aid is preferably 1 part by mass or more and 10 parts by mass or less, and more preferably 2 parts by mass or more and 5 parts by mass or less, per 100 parts by mass of the hydrogen-containing fluororubber in order to obtain satisfactory physical properties as a sealing material. The content (C) of the crosslinking aid is preferably higher than the content (A) of the thermal crosslinking agent in order to increase plasma resistance. The ratio (C/A) of the content (C) of the crosslinking aid to the content (A) of the thermal crosslinking agent is preferably 1.0 or more and 4.0 or less, and more preferably 2.0 or more and 3.0 or less, in order to cause the crosslinking aid to react without excess or deficiency and obtain satisfactory physical properties as a sealing material.

The uncrosslinked rubber composition according to the embodiment may contain a fluororubber that does not contain carbons bonded to hydrogens in its polymer main chain such as silicone rubber and a copolymer of tetrafluoroethylene and perfluorovinylether, which are rubber components other than the hydrogen-containing fluororubber, as long as the content of such a fluororubber is lower than that of the hydrogen-containing fluororubber. Depending on the rubber product to be manufactured, the uncrosslinked rubber composition according to the embodiment may contain a reinforcing material such as carbon black and silica, a plasticizer, a processing aid, a vulcanization accelerator, an anti-aging agent, etc. However, when used to manufacture such a rubber product that generation of particles in a plasma atmosphere is a problem, the content of a powdered inorganic filler such as carbon black, silica, and a metal oxide is preferably 5 parts by mass or less, more preferably 3 parts by mass or less, and most preferably 0 parts by mass per 100 parts by mass of the hydrogen-containing fluororubber. A powdered organic filler such as hydrogen-containing fluororesin powder like PVDF or ETFE is expected to improve physical properties due to crosslinking with the hydrogen-containing fluororubber when irradiated as described below.

The uncrosslinked rubber composition according to the embodiment can be manufactured using an open rubber kneading machine such as an open roll or a sealed rubber kneading machine such as a kneader.

Next, a method for manufacturing a rubber product using the uncrosslinked rubber composition according to the embodiment will be described.

In the method for manufacturing a rubber product, a cavity of a preheated mold is first filled with a predetermined amount of uncrosslinked rubber composition according to the embodiment, and the mold is then closed. Thereafter, the mold is kept in this state at a predetermined molding temperature and a predetermined molding pressure for a predetermined molding time. At this time, the uncrosslinked rubber composition according to the embodiment is molded into the shape of the cavity and loses its plasticity due to crosslinking of the hydrogen-containing fluoroelastomer by the thermal crosslinking agent. This molding may be either press molding or injection molding. The molding temperature is, e.g., 150°C or higher and 180°C or less. The molding pressure is, e.g., 0.1 MPa or higher and 25 MPa or less. The molding time is, e.g., 3 minutes or more and 20 minutes or less.

The mold is then opened, and the molding is taken out of the mold and cooled. The molding is then irradiated. When irradiated, the carbon-hydrogen bonds at the hydrogen sites of the hydrogen-containing fluororubber are broken and carbon radicals are formed. The hydrogen site protective agent bonds to the carbon radicals. Examples of the radiation include α-rays, β-rays, γ-rays, electron beams, and ions. Among these, the radiation is preferably electron beams or γ-rays. In order to increase plasma resistance, the radiation dose is preferably 10 kGy or more and 100 kGy or less, and more preferably 30 kGy or more and 80 kGy or less.

A rubber product that is made of a rubber composition in which a hydrogen-containing fluororubber has been crosslinked by a thermal crosslinking agent and a hydrogen site protective agent has bonded to carbons resulting from breakage of carbon-hydrogen bonds of the hydrogen-containing fluororubber is thus produced using the uncrosslinked rubber composition according to the embodiment.

According to the uncrosslinked rubber composition according to the embodiment having the above configuration, the hydrogen sites of the hydrogen-containing fluororubber, which are sites with low plasma resistance, are protected as the hydrogen site protective agent bonds to carbon radicals resulting from breakage of the carbon-hydrogen bonds which occurs under irradiation. A rubber product with high plasma resistance can thus be manufactured using this uncrosslinked rubber composition. Since the hydrogen site protective agent reacts with hydrogen-containing fluororubber, bleedout will not occur.

### Examples

### (Rubber Composition)

Rubber compositions of Examples 1 and 2 and Comparative Examples 1 to 3 were prepared. The configurations of these rubber compositions are also shown in Table 1.

### <Example 1>

An uncrosslinked rubber composition was prepared by adding 1.5 parts by mass of 2,5-dimethyl-2,5-di(t-butylperoxy)hexane (PERHEXA 25B, made by NOF CORPORATION), which is a peroxide as a thermal crosslinking agent, 10 parts by mass of a compound with a perfluoro skeleton having a vinyl group in its molecule (SIFEL3590-N, made by Shin-Etsu Chemical Co., Ltd., viscosity (23°C): 50 Pa·s), which is a one-component liquid material as a hydrogen site protective agent, and 4 parts by mass of triallyl isocyanurate (TAIC, made by Nihon Kasei CO., LTD.) as a crosslinking aid to 100 parts by mass of a hydrogen-containing fluororubber made of a copolymer of vinylidene fluoride, hexafluoropropylene, and tetrafluoroethylene (DAI-EL G912, made by DAIKIN INDUSTRIES, LTD.) and kneading the mixture. Subsequently, the uncrosslinked rubber composition was press-molded at 165°C and 5 MPa for 15 minutes and then heat-treated at 200°C for 4 hours to produce a sheet-like rubber composition. The sheet-like rubber composition was irradiated with γ-rays at a dose of 30 kGy. Example 1 is the sheet-like rubber composition thus irradiated with γ-rays.

### <Example 2>

Example 2 is a sheet-like rubber composition produced in a manner similar to that of Example 1 except that a compound with a siloxane skeleton having a vinyl group in its molecule (KE-1830, made by Shin-Etsu Chemical Co., Ltd. Viscosity (23°C): 130 Pa·s), which is a one-component liquid material, was added as a hydrogen site protective agent.

### <Comparative Example 1>

Comparative Example 1 is a sheet-like rubber composition produced in a manner similar to that of Example 1 except that no hydrogen site protective agent was added.

### <Comparative Example 2>

Comparative Example 2 is a sheet-like rubber composition produced in a manner similar to that of Example 1 except that no hydrogen site protective agent was added and 20 parts by mass of silicone rubber (KE-941-U, made by Shin-Etsu Chemical Co., Ltd.) was added to 100 parts by mass of the hydrogen-containing fluororubber.

### <Comparative Example 3>

Comparative Example 3 is a sheet-like rubber composition produced in a manner similar to that of Example 1 except that no hydrogen site protective agent was added and 20 parts by mass of a copolymer of tetrafluoroethylene and perfluorovinylether (FFKM: AFLAS Premium PM1100, made by AGC Inc.) was added to 100 parts by mass of the hydrogen-containing fluororubber.

**[Table 1]**

| | | | Examples | | Comparative Examples | | |
|---|---|---|---|---|---|---|---|
| | | | 1 | 2 | 1 | \| 2 | \| 3 |
| Hydrogen-Containing Fluororubber | | | 100 | 100 | 100 | 100 | 100 |
| Crosslinking Agent (A) | | | 1.5 | 1.5 | 1.5 | 1.5 | 1.5 |
| Hydrogen Site Protective Agent 1 (B) | | | 10 | | | | |
| Hydrogen Site Protective Agent 2 (B) | | | | 10 | | | |
| Crosslinking Aid (C) | | | 4 | 4 | 4 | 4 | 4 |
| Silicone Rubber | | | | | | 20 | |
| FFKM | | | | | | | 20 |
| B/A | | | 6.7 | 6.7 | - | - | - |
| C/A | | | 2.7 | 2.7 | 2.7 | 2.7 | 2.7 |
| Plasma Resistance | O₂ | Mass Loss, mass% | 0.5 | 0.3 | 2.9 | 0.8 | 0.6 |
| | | Cracks | None | None | Yes | Yes | Yes |
| | | Particles | None | None | None | None | None |
| | CF₄ | Mass Loss, mass% | 0.2 | 0.1 | 0.2 | 1.2 | 0.1 |
| | | Cracks | None | None | None | Yes | None |
| | | Particles | None | None | None | None | None |
| Tensile Properties | M₁₀₀, MPa | | 2.0 | 2.2 | 2.1 | 1.5 | 1.7 |
| | TB, MPa | | 10.9 | 11.5 | 12.0 | 8.50 | 11.3 |
| | EB, % | | 250 | 200 | 200 | 250 | 190 |
| Compression Set, % | | | 39 | 35 | 28 | 47 | 41 |

### (Test Methods)

### <Plasma Resistance>

For each of Examples 1 and 2 and Comparative Examples 1 to 3, an O₂ plasma irradiation test and a CF₄ plasma irradiation test were performed using a microwave plasma generator at 10% elongation to check for mass loss, any cracks, and any particles. In the tests, O₂ and CF₄ were used as reactant gases. The flow rate of O₂ to CF₄ was 50 to 1 in the O₂ plasma irradiation test and was 1 to 50 in the CF₄ plasma irradiation test. The reaction pressure was 100 Pa and the plasma irradiation time was 60 minutes.

### <Tensile Properties>

For each of Examples 1 and 2 and Comparative Examples 1 to 3, a tensile test was performed based on JIS K 6251 to measure 100% modulus (M₁₀₀: tensile stress at 100% elongation), tensile strength (TB), and elongation at break (EB).

### <Compression Set>

For each of Examples 1 and 2 and Comparative Examples 1 to 3, compression set was measured based on JIS K 6262: 2013. The test time was 72 hours and the test temperature was 200°C.

### (Test Results)

Table 1 shows the test results.

According to Table 1, Examples 1 and 2 using a hydrogen site protective agent have high resistance to both O₂ plasma and CF₄ plasma. With O₂ plasma irradiation, Comparative Examples 1 to 3 using no hydrogen site protective agent produced no particles but had great mass loss (especially Comparative Example 1) and developed cracks. Comparative Examples 1 to 3 have high resistance to CF₄ plasma. With CF₄ plasma irradiation, however, Comparative Example 2 produced no particles but had great mass loss and developed cracks. No significant difference in tensile properties and compression set was observed between Examples 1 and 2 and Comparative Examples 1 to 3.

### INDUSTRIAL APPLICABILITY

The present invention is useful in the technical field of uncrosslinked rubber compositions, rubber products using the same, and methods for manufacturing a rubber product.

## Claims

1. An uncrosslinked rubber composition containing:
a hydrogen-containing fluororubber;
a thermal crosslinking agent that crosslinks the hydrogen-containing fluororubber when heated to a predetermined temperature; and
a hydrogen site protective agent that bonds to carbon radicals resulting from breakage of carbon-hydrogen bonds of the hydrogen-containing fluororubber which occurs under irradiation.

2. The uncrosslinked rubber composition of claim 1, wherein
the hydrogen site protective agent contains a compound with a perfluoro skeleton having an alkenyl group that bonds to the carbon radical in its molecule and/or a compound with a siloxane skeleton having an alkenyl group that bonds to the carbon radical in its molecule.

3. The uncrosslinked rubber composition of claim 2, wherein
the hydrogen site protective agent has two or more alkenyl groups in its molecule.

4. The uncrosslinked rubber composition of claim 2, wherein
the alkenyl group is a vinyl group.

5. The uncrosslinked rubber composition of claim 1, wherein
the content of the hydrogen site protective agent is 1 part by mass or more and 20 parts by mass or less per 100 parts by mass of the hydrogen-containing fluororubber.

6. The uncrosslinked rubber composition of claim 1, wherein
the thermal crosslinking agent contains a peroxide.

7. The uncrosslinked rubber composition of claim 6, wherein
the thermal crosslinking agent contains 2,5-dimethyl-2,5-di(t-butylperoxy)hexane.

8. The uncrosslinked rubber composition of claim 1, wherein
the content of the thermal crosslinking agent is 0.5 parts by mass or more and 2.5 parts by mass or less per 100 parts by mass of the hydrogen-containing fluororubber.

9. The uncrosslinked rubber composition of claim 1, wherein
the ratio of the content of the hydrogen site protective agent to the content of the thermal crosslinking agent is 2.5 or more and 30 or less.

10. The uncrosslinked rubber composition of claim 1, further containing:
a crosslinking aid that bonds to the hydrogen-containing fluororubber so as to be located between molecules of the hydrogen-containing fluororubber when the hydrogen-containing fluororubber is crosslinked by the thermal crosslinking agent.

11. The uncrosslinked rubber composition of claim 10, wherein
the crosslinking aid contains triallyl isocyanurate.

12. The uncrosslinked rubber composition of claim 10, wherein
the content of the crosslinking aid is 1 part by mass or more and 10 parts by mass or less per 100 parts by mass of the hydrogen-containing fluororubber.

13. The uncrosslinked rubber composition of claim 10, wherein
the ratio of the content of the crosslinking aid to the content of the thermal crosslinking agent is lower than 4.0.

14. The uncrosslinked rubber composition of claim 1, wherein
the content of an inorganic filler is 5 parts by mass or less per 100 parts by mass of the hydrogen-containing fluororubber.

15. A rubber product manufactured using the uncrosslinked rubber composition of claim 1, the rubber product being made of a rubber composition in which the hydrogen-containing fluororubber has been crosslinked by the thermal crosslinking agent and the hydrogen site protective agent has bonded to carbons resulting from breakage of the carbon-hydrogen bonds of the hydrogen-containing fluororubber.

16. The rubber product of claim 15, wherein
the rubber product is a sealing material.

17. A method for manufacturing a rubber product, comprising:
after heating the uncrosslinked rubber composition of claim 1 to the predetermined temperature to crosslink the hydrogen-containing fluororubber by the thermal crosslinking agent, irradiating the resultant rubber composition so that the hydrogen site protective agent bonds to the carbon radicals resulting from breakage of the carbon-hydrogen bonds of the hydrogen-containing fluororubber.
